# EUROPÄISCHE PATENTSCHRIFT

(11) **EP 1 983 303 B1**
(45) Veröffentlichungstag und Bekanntmachung des Hinweises auf die Patenterteilung: **02.11.2011**
(21) Anmeldenummer: 08002441.7
(22) Anmeldetag: 11.02.2008
(51) Int. Cl.: G01C 21/36

(54) **Verfahren zum Betrieb einer Einrichtung, insbesondere einer Navigationseinrichtung**
Method for operating a device, in particular a navigation device
Procédé pour faire fonctionner un dispositif, en particulier un dispositif de navigation

(30) Priorität: 19.04.2007 DE 102007018880; 27.04.2007 DE 102007020434
(43) Veröffentlichungstag der Anmeldung: 22.10.2008
(73) Patentinhaber: Navigon AG, 20251 Hamburg (DE)
(72) Erfinder: Haag, Dominik, 96050 Bamberg (DE); Schliermann, Christian, 97246 Eibelstadt (DE)
(74) Vertreter: von den Steinen, Axel

(56) Entgegenhaltungen:
- EP-A- 0 724 136
- EP-A- 0 970 832
- DE-C1- 19 619 643
- JP-A- 6 317 650

## Beschreibung

Die Erfindung betrifft ein Verfahren zum Betrieb einer Einrichtung, insbesondere einer Navigationseinrichtung, nach der Lehre des Anspruchs 1.

Gattungsgemäße Navigationseinrichtungen werden insbesondere, jedoch keineswegs ausschließlich, als mobile oder fest eingebaute Navigationsgeräte in Kraftfahrzeugen verwendet. Der Benutzer hat dabei die Möglichkeit, ein Ziel einzugeben, wobei das Navigationsgerät die jeweils aktuelle Position des Kraftfahrzeugs durch Auswertung von GPS-Signalen bestimmt und dann dem Fahrer Anweisungen zur Ansteuerung des Zielpunktes gibt. Die gattungsgemäßen Navigationseinrichtungen sind dabei mit einer Wegenetzdatenbank ausgestattet, die Informationen über die nutzbaren Wegstrecken enthält. Insbesondere ist bei den gattungsgemäßen Navigationseinrichtungen eine Wegenetzdatenbank vorhanden, die auch Positionsdaten über Tunnel enthält. Diese Tunnelpositionsdaten sollen ganz allgemein als Tunnelattribute bezeichnet werden, welche üblicherweise Straßensegmenten zugeordnet sind.

Bei der Benutzung von Tunneln ergibt sich das Problem, dass insbesondere bei Taglicht in der Umgebung außerhalb des Tunnels eine sehr schnelle Absenkung der Umgebungslichtstärke beim Einfahren in den Tunnel erfolgt. Aufgrund des sehr viel schwächeren Umgebungslichtes kann es dann im Tunnel zu einer Blendwirkung kommen, da die Anzeigeeinrichtung der Navigationseinrichtung, die üblicherweise in der Art eines LCD-Bildschirms ausgebildet ist, auf eine Leuchtstärke bzw. ein Farbschema eingestellt ist, die bzw. das das Erkennen der Straßenkarte und der Position des Fahrzeugs auch bei Tageslicht ermöglicht.

Zur Vermeidung dieser Blendwirkung gibt es aus dem Stand der Technik verschiedene Lösungsstrategien. Die DE 196 19 643 C1 beschreibt eine manuelle Helligkeitssteuerung, die es dem Benutzer ermöglicht, durch Auslösung entsprechender Benutzerbefehle manuell die Einstellung der Anzeigeeinrichtung auf die Erfordernisse beim Durchfahren eines Tunnels umzustellen. Diese manuelle Aktivierung eines Tunnelmodus der Anzeigeeinrichtung hat den Nachteil, dass dies insbesondere bei sehr kurzen Tunnelstrecken für den Benutzer einen erheblichen Bedienungsaufwand darstellt, so dass die Umstellung häufig unterbleibt und es deshalb bei der Tunneldurchfahrt aufgrund des zu hell eingestellten Displays zur Blendwirkung kommt, die die Verkehrssicherheit beeinträchtigt. Außerdem fordert die manuelle Umstellung der Einstellung der Anzeigeeinrichtung viel Aufmerksamkeit des Benutzers, die den Benutzer vom eigentlichen Fahrgeschehen ablenkt, was wiederum zur Beeinträchtigung der Fahrsicherheit beiträgt. Insbesondere in Tunneln ist die Fahrsicherheit jedoch von größter Bedeutung, da es hier zu sehr schweren Verkehrsunfällen kommen kann.

Alternativ zur manuellen Umschaltung der Anzeigeeinrichtung in einen Tunnelmodus sind Lösungsansätze bekannt, bei denen die Navigationseinrichtung mit einem Lichtsensor die Umgebungslichtstärke misst und abhängig von der gemessenen Umgebungslichtstärke die Einstellungen der Anzeigeeinrichtung verändert. So kann bei hellem Tageslicht die Leuchtstärke des Displays erhöht und in dunkler Umgebung, beispielsweise bei Nacht oder im Tunnel, die Leuchtstärke des Displays automatisch in Abhängigkeit von den Messsignalen des Lichtsensors abgesenkt werden. Nachteilig an der Verwendung eines Lichtsensors ist es, dass dadurch zusätzliche Hardwarekosten entstehen. Außerdem ist bei manchen Geräten, beispielsweise bei Mobiltelefonen oder PDAs, die Integration eines Lichtsensors in der Hardware nicht vorgesehen. Weiterhin kann es durch den Lichtsensor zu Fehleinstellungen kommen, da der Lichtsensor dauerhaft aktiv ist und von anderen Umgebungseinflüssen, beispielsweise dem Abblendlicht entgegenkommender Fahrzeuge, der Tunnelbeleuchtung oder der Innenraumbeleuchtung, gestört werden kann. Es ist deshalb kaum möglich, den Lichtsensor so einzustellen bzw. zu programmieren, dass er die Display-Helligkeit jeweils nur zum gewünschten Zeitpunkt und nur dann korrekt einstellt. Eine Navigationseinrichtung mit Lichtsensor ist beispielsweise in der DE 32 45 299 A1 oder der DE 199 27 538 A1 beschrieben.

In der DE 196 19 643 C1 ist weiterhin eine Lösungsstrategie beschrieben, bei der der Tunnelmodus immer dann aktiviert wird, wenn die aktuelle Fahrzeugposition als Ort identifiziert ist, der in einem Tunnel liegt. Diese Lösung hat den Nachteil, dass die in der Wegenetzdatenbank gespeicherten Tunnelattribute häufig nicht ausreichend genau bzw. eindeutig sind. So kann es aufgrund von Datenkompressionen vorkommen, dass sowohl Tunnel als auch Brücken mit einem gemeinsamen Attribut (Brunnel) versehen sind und damit die Zuordnung von Tunneln nicht mehr ohne weiteres möglich ist. Außerdem gibt es halboffene Tunnel, so genannte Galerien, die das Tunnelattribut tragen, bei denen jedoch eine Umschaltung der Anzeigeeinrichtung auf den Tunnelmodus aufgrund des durch die Galerie einfallenden Umgebungslichts nicht erwünscht ist. Ein weiteres Hauptproblem von Systemen, bei denen die Umschaltung in den Tunnelmodus der Anzeigeeinrichtung allein abhängig von der ermittelten Fahrzeugposition und deren Identifikation als Tunnel erfolgt, liegt darin, dass die Fahrzeugposition im Tunnel aufgrund des fehlenden GPS-Signals extrapoliert werden muss, wenn auch ansonsten keine Sensoren zur Ortbestimmung vorhanden sind. Die Extrapolation verläuft vorzugsweise so, dass aufgrund von Randbedingungen, wie der Geschwindigkeit vor Abreißen des GPS-Signals, erlaubter Geschwindigkeit, Geometrie der Kartenelemente, auf denen das Fahrzeug sich bewegt, sowie der gerechneten Route eine Fahrzeugposition auf der Route angenommen wird und diese als extrapolierte GPS-Position in der Navigationseinrichtung weiterbearbeitet wird. Diese Extrapolation der Fahrzeugposition hat naturgemäß Ungenauigkeiten, so dass die reale Fahrzeugposition signifikant von der extrapolierten Fahrzeugposition abweichen kann. Diese Abweichung führt wiederum dazu, dass der Tunnelmodus beim Ausfahren aus dem Tunnel zu früh oder zu spät deaktiviert wird.

Aus der EP 0 724 136 ist ein Verfahren zum Betrieb einer Navigationseinrichtung bekannt, welches ein selbsttätiges Aktivieren eines Tunnelmodus für den Fall beschreibt, dass die Anzahl der empfangenen Satelliten auf null zurückgegangen ist.

Nachteilig an diesem Verfahren ist es, dass das Vorhandensein eines Tunnels nicht mit genügender Sicherheit zum richtigen Zeitpunkt ermittelt werden kann.

In der JP 06 317650 ist ein Navigationsgerät beschrieben, welches dafür ausgerüstet ist, für den Fall, dass sich das zugehörige Fahrzeug in einem Tunnel befindet, den Tunnel auf einer Anzeige graphisch hervorzuheben. Wenn kein Satellitensignal mehr empfangbar ist, überprüft das Navigationsgerät anhand von Kartendaten, ob ein Tunnel vorliegt. Nachteilig ist jedoch, dass die Erkennung eines Tunnels erst dann erfolgt, wenn kein GPS-Signal empfangbar ist.

Ausgehend von diesem Stand der Technik ist es deshalb Aufgabe der vorliegenden Erfindung, ein neues Verfahren zum Betrieb einer Navigationseinrichtung vorzuschlagen, bei dem die oben beschriebenen Probleme bei der Aktivierung bzw. Deaktivierung des Tunnelmodus der Anzeigeeinrichtung vermieden werden.

Diese Aufgabe wird durch ein Verfahren nach der Lehre des Anspruchs 1 gelöst.

Vorteilhafte Ausführungsformen der Erfindung sind Gegenstand der Unteransprüche.

Gemäß dem gattungsgemäßen Verfahren wird fortlaufend die Fahrzeugposition unter Berücksichtigung der empfangenen Positionssignale ermittelt. Der Tunnelmodus der Anzeigeeinrichtung, d.h. beispielsweise die Absenkung der Bildschirmhelligkeit bzw. die Änderung der Bildschirmfarbschemas, wird selbsttätig und automatisch aktiviert, sobald die Fahrzeugposition ein Tunnelattribut trägt und die empfangenen Positionssignale eine vorgegebene Signalqualität unterschreiten. Die Signalqualität der empfangenen Positionssignale ist abhängig von der Anzahl der vom Fahrzeug aus sichtbaren GPS-Satelliten sowie der Satellitenkonstellation, welches sich im sog. HDOP-Wert ((horizontal dilution of precision) widerspiegelt. Es ist vorteilhaft, bei Unterschreitung der Mindestzahl von 3 Satelliten und/oder Überschreitung eines Grenzwertes für den HDOP-Wert einen GPS-Signalqualitäts-Parameter einfließen zu lassen, für den ein Grenzwert definiert wird, ab dem die Signalqualität als nicht hinreichend definiert wird. Damit wird sichergestellt, dass die Abdeckung des Fahrzeuges durch einen Tunnel einen signifikanten Sprung in der Signalqualität der empfangenen Positionssignale bewirkt. Die Aktivierung des Tunnelmodus kann dabei entweder sofort erfolgen, wenn beide Bedingungen erfüllt sind. Es sind aber auch Verfahrensvarianten denkbar, bei denen die Aktivierung des Tunnelmodus erst zeitverzögert nach Erfüllung beider Bedingungen erfolgt.

Das Bildschirmfarbschema für den Tunnelmodus und den Nichttunnelmodus kann dabei sowohl die Verwendung von bestimmten Farben als auch von anderen Hintergrundgrafiken, der Strichdicke von Linien, Füllmustern von Flächen etc. umfassen. Diese Farbschemata werden auch als 'Skins' bezeichnet und sind in einer vorteilhaften Ausprägung vom Benutzer konfigurierbar bzw. auswählbar, so dass verschiedene Farbschemata/Skins zur Auswahl stehen und den einzelnen Modi (Tunnelmodus, Nachtmodus, Tagmodus) zugeordnet werden können.

Die Umschaltung zwischen den Modi kann im Übrigen sowohl übergangslos als auch in einem sanften Übergang passieren, so dass z.B. für die Lichtstärke und die Farbtöne des Farbschemas Zwischentöne berechnet und in schneller Folge dargestellt werden, so dass der Eindruck des Dimmens entsteht.

Gegenüber der Lösungsvariante unter Verwendung eines Lichtsensors bietet das erfindungsgemäße Verfahren den Vorteil, dass es rein softwarebasiert realisiert werden kann und somit keine zusätzlichen Hardwarekosten entstehen. Außerdem ist das Verfahren hardwareunabhängig und kann deshalb auf verschiedene Geräte bzw. unterschiedliche Hardware adaptiert werden. Außerdem ist gewährleistet, dass die Aktivierung und Deaktivierung des Tunnelmodus nicht durch äußere Umgebungseinflüsse gestört wird.

Gegenüber der Lösungsvariante, bei der die Umschaltung des Tunnelmodus allein in Abhängigkeit von der Identifikation der Fahrzeugposition in einem Tunnel erfolgt, hat das erfindungsgemäße Verfahren den Vorteil, dass es weniger bzw. keine fehlerhaften Abschaltungen aufgrund von Extrapolationsfehlern gibt, da zur Umschaltung des Tunnelmodus beide Bedingungen erfüllt sein müssen. Somit ist eine hohe Prozesssicherheit bei der tunnelabhängigen Displaysteuerung gegeben. Denn das Abreißen des GPS-Signals und die damit verbundene Unterschreitung der vorgegebenen Signalqualität sind zur sicheren Identifikation der Einfahrt in einen Tunnel sehr geeignet. Insbesondere wird die Fehlumschaltung in den Tunnelmodus durch ungenaue Tunnelattribute bzw. bei sehr kurzen Tunneln, die die Umschaltung eigentlich nicht erfordern, vermieden.

Um jeweils definierte Anfangsbedingungen bei Betrieb der Navigationseinrichtung zu schaffen, ist es besonders vorteilhaft, wenn bei Neustart der Navigationseinrichtung, beispielsweise wenn das Navigationsgerät abgeschaltet war bzw. wenn es in den Standby-Modus versetzt worden ist, der Tunnelmodus jeweils automatisch deaktiviert wird. Nach dem Neustart der Navigationseinrichtung ist damit jeweils automatisch gewährleistet, dass der Tunnelmodus deaktiviert ist.

Abgesehen vom Tunnelmodus kann die Displaysteuerung auch noch verschiedene andere Beleuchtungsschemata für die Anzeigeeinrichtung aufweisen. So ist es denkbar, dass es einen Nachtmodus und einen Taglichtmodus gibt. Um jeweils die richtigen Einstellungen der Anzeigeeinrichtung nach Ausfahrt aus einem Tunnel wieder zu finden, ist es besonders vorteilhaft, wenn jeweils die Einstellungen aktiviert werden, die vor Aktivierung des Tunnelmodus gegolten haben. Wurde beispielsweise im Nachtmodus in einen Tunnel eingefahren, so sollte der Nachtmodus auch nach Verlassen des Tunnels wieder aktiviert werden. Im praktischen Betrieb kann daraus folgen, dass der Benutzer die Umschaltung zwischen Nachtmodus und Tunnelmodus nicht erkennen kann, wenn nämlich die Einstellungen der Anzeigeeinrichtung im Tunnelmodus gerade den Einstellungen der Anzeigeeinrichtung im Nachtmodus entsprechen. Auf der anderen Seite kann der Nachtmodus auch lediglich in einer Reduzierung der Lichtstärke bestehen, während der Tunnelmodus auch das Farbschema verändert, auch die umgekehrte Variante ist denkbar. Alternativ dazu kann es auch vorgesehen sein, dass bei aktiviertem Nachtmodus die Aktivierung des Tunnelmodus und/oder dass bei aktiviertem Nachtmodus die Deaktivierung des Tunnelmodus bei Ausfahrt aus einem Tunnel ausgeschlossen ist.

Das erfindungsgemäße Verfahren ist primär auf die Aktivierung des Tunnelmodus bei Einfahrt in einen Tunnel gerichtet. Allerdings stellt sich auch die Frage, wann bzw. bei welchen Bedingungen der Tunnelmodus wieder deaktiviert werden soll. Dafür werden drei verschiedene Verfahrensvarianten vorgeschlagen.

Nach der ersten Verfahrensvariante zur Deaktivierung des Tunnelmodus wird jeweils überprüft, ob die ermittelte Fahrzeugposition kein Tunnelattribut mehr aufweist und ob die empfangenen Positionssignale eine vorgegebene Signalqualität überschreiten. Erst wenn beide Bedingungen erfüllt sind, wird der Tunnelmodus wieder deaktiviert. Diese Verfahrensvariante zur Deaktivierung des Tunnelmodus entspricht letztendlich analog der Aktivierungsstrategie, bei der ebenfalls beide Bedingungen jeweils überprüft werden. Die Deaktivierung des Tunnelmodus kann entsprechend der Aktivierung des Tunnelmodus entweder sofort bei Erfüllung beider Bedingungen oder zeitverzögert erfolgen.

Alternativ zur Überprüfung beider Bedingungen ist es auch denkbar, dass bei der Deaktivierung des Tunnelmodus nur die Signalqualität der empfangenen Positionssignale überwacht wird und, sobald eine vorgegebene Signalqualität überschritten ist, die Deaktivierung des Tunnelmodus erfolgt, ohne dass die ermittelte Fahrzeugposition Berücksichtigung findet. Diese Verfahrensvariante hat den Vorteil, dass Ungenauigkeiten in der ermittelten Fahrzeugposition, wie sie aufgrund des fehlenden Positionssignals im Tunnel vorkommen, keine Berücksichtigung finden und somit die Deaktivierung immer genau dann erfolgt, wenn das Positionssignal, insbesondere das GPS-Signal, wieder ausreichend stark ist. Denn zu diesem Zeitraum kann zuverlässig angenommen werden, dass das Fahrzeug den Tunnel bereits wieder verlassen hat bzw. das Ende des Tunnels unmittelbar bevorsteht.

Alternativ dazu kann gemäß einer dritten Verfahrensvariante die Deaktivierung des Tunnelmodus auch allein in Abhängigkeit der ermittelten Fahrzeugposition erfolgen. Diese Verfahrensvariante ist insbesondere dann von Vorteil, wenn die Fahrzeugposition im Tunnel ohne Auswertung von Positionssignalen durch Extrapolationsverfahren und/oder durch Auswertung anderer Sensoren zur Ortsbestimmung mit hinreichender Genauigkeit ermittelt werden kann. Dadurch werden Fehler in der Deaktivierung des Tunnelmodus, wie sie durch die Einstrahlung des GPS-Signals in den Endabschnitt des Tunnels verursacht werden können, ausgeschlossen.

Ein großes Problem bei der Aktivierung bzw. Deaktivierung des Tunnelmodus im praktischen Betrieb ist es, dass die Umschaltung zu häufig, d.h. zu unmittelbar, erfolgt. Dieses Problem stellt sich insbesondere dann, wenn die für die Aktivierung bzw. Deaktivierung des Tunnelmodus ausgewerteten Bedingungen sehr häufig wechseln. Um dieses Problem zu umgehen, ist es deshalb besonders vorteilhaft, wenn die Aktivierung bzw. Deaktivierung jeweils mit einer bestimmten Zeitverzögerung vorgenommen wird, so dass sich zu häufig ändernde Umschaltbedingungen auf diese Weise ausgeblendet werden.

Nach einer ersten Verfahrensvariante zur verzögerten Deaktivierung des Tunnelmodus wird mit einer Zeitmesseinrichtung jeweils die Zeit gemessen, die abgelaufen ist, seit die empfangenen Positionssignale wieder eine vorgegebene Signalqualität überschritten haben. Erst dann, wenn die gemessene Zeit eine vorgegebene Verzögerungszeit überschritten hat, wird die Deaktivierung des Tunnelmodus vorgenommen. Damit wird ausgeschlossen, dass bei sehr häufig wechselnden Tunnelsituationen ein ständiges Umschalten des Displays zwischen Normalmodus und Tunnelmodus erfolgt.

Alternativ bzw. additiv dazu kann auch jeweils die Zeit gemessen werden, die abgelaufen ist, seit die empfangenen Positionssignale eine vorgegebene Signalqualität unterschritten haben. Dadurch kann ausgeschlossen werden, dass bei Einfahrt in einen Tunnel der Tunnelmodus aktiviert wird, wenn der Tunnel beispielsweise nur sehr kurz ist und das Positionssignal bereits nach sehr kurzer Zeit wieder eine ausreichende Signalqualität erreicht hat.

Weiterhin kann bei der Aktivierung bzw. Deaktivierung des Tunnelmodus auch jeweils die Zeit gemessen werden, die abgelaufen ist, seit der Tunnelmodus aktiviert bzw. deaktiviert wurde. Nur wenn diese Zeit jeweils eine im System vorgegebene Verzögerungszeit überschreitet, kann der Tunnelmodus deaktiviert bzw. aktiviert werden. Eine flackernde ständige Umschaltung des Displays ist somit ausgeschlossen.

Es können die einzelnen Verzögerungszeiten unabhängig voneinander überwacht werden. Besondere komfortabel ist es aber, wenn zumindest zwei verschiedene Verzögerungszeiten parallel zueinander überwacht werden, wobei der Tunnelmodus durch die Displaysteuerung nur dann zeitverzögert aktiviert wird, wenn alle überwachten Zeiten die jeweils zugeordneten Verzögerungszeiten überschritten haben.

Da die Verzögerungszeiten ein Komfortmerkmal sind, ist es besonders vorteilhaft, wenn diese durch den Benutzer konfigurierbar sind.

Außerdem ist es nach einer bevorzugten Verfahrensvariante vorgesehen, dass die tunnelabhängige Displaysteuerung durch Eingabe eines Bedienerbefehls abgeschaltet werden kann, so dass der Benutzer die Möglichkeit hat, die tunnelabhängige Displaysteuerung insgesamt zu deaktivieren.

Ein weiterer Anwendungsbereich für die beschriebenen Verfahrensvarianten der Detektierung der Einfahrt bzw. der Ausfahrt aus dem Tunnel ist zudem vorgesehen für Navigationseinrichtungen, die - wie üblicherweise Einbaunavigationsgeräte - mit dem Fahrzeugbus verbunden sind oder anderweitig in Kontakt mit Fahrzeugeinrichtungen stehen und Daten mit dem Fahrzeug austauschen. In diesem Fall kann durch die Detektierung der Einfahrt in den Tunnel ein Signal an diese Fahrzeugeinrichtungen gesendet werden, so dass diese ebenfalls in einen tunnelspezifischen Modus versetzt werden, bzw. durch Detektierung der Ausfahrt aus dem Tunnel entsprechend der tunnelspezifische Modus wieder deaktiviert werden. Hierbei kann es sich um das Abblendlicht handeln, welches ein- bzw. abgeschaltet wird, sowie die Fahrzeuglüftung, die im Tunnel reduziert wird, das Abschalten des Scheibenwischers oder die Reduzierung der Hintergrundbeleuchtung der Armaturen.

Entsprechend dem beschriebenen Verfahren ist auch für diese Fahrzeugeinrichtungen vorgesehen, dass der Modus der einzelnen Komponenten vor der Tunneleinfahrt wiederhergestellt wird nach dem Tunnel bzw., falls der Modus vor dem Tunnel genau dem tunnelspezifischen Modus entspricht (z.B. Abblendlicht ist bereits eingeschaltet), keine Veränderung durch die detektierte Tunnelein- und -ausfahrt erzielt wird. Diese Prüfung ist für jede Komponente einzeln durchzuführen.

Eine Ausführungsform der Erfindung ist in den Zeichnungen schematisch dargestellt und wird nachfolgend beispielhaft erläutert.

Es zeigen:
- Fig. 1: den schematischen Aufbau eines Navigationsgeräts zur Durchführung des erfindungsgemäßen Verfahrens;
- Fig. 2: ein Ablaufdiagramm zur Aktivierung des Tunnelmodus;
- Fig. 3: ein Ablaufdiagramm zur Deaktivierung des Tunnelmodus.

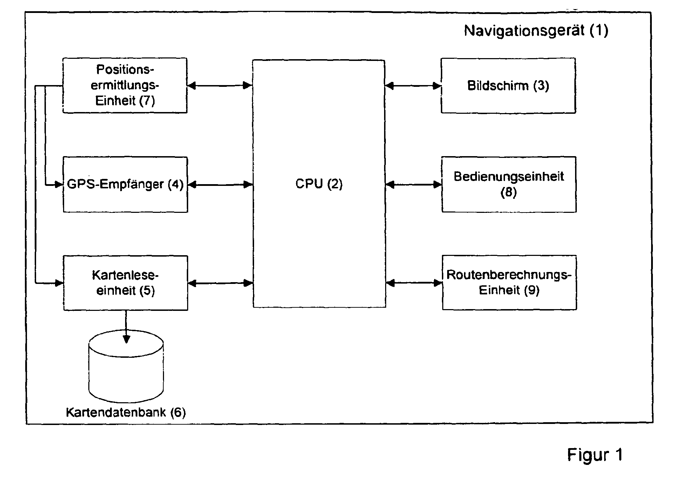

Der Aufbau einer Navigationseinrichtung zur Durchführung des erfindungsgemäßen Verfahrens ist in Fig. 1 beispielhaft dargestellt, wobei nicht alle dargestellten Argumente für die Durchführung des erfindungsgemäßen Verfahrens zwingend erforderlich sind.

Die Navigationseinrichtung 1 enthält in einer baulichen Einheit oder auf verschiedene Komponenten verteilt eine Prozessoreinrichtung 2 (CPU), die als zentrale Recheneinheit dient. Es können auch durchaus mehrere Prozessoren vorhanden sein, wobei insbesondere eigene Prozessoren zur Bildschirmsteuerung häufig Verwendung finden. Die Displaysteuerung zur Einstellung der Anzeigeeinrichtung kann als Teil der Prozessoreinrichtung softwaremäßig realisiert sein.

Ein Bildschirm 3 dient zur Darstellung einer Straßenkarte, einer Routenführung sowie vorzugsweise einer Zustandsanzeige, z.B. von Autofunktionen, GPS-Status etc. In Kombination mit einer Bedieneinheit 8, die beispielsweise als Touch-Screen ausgebildet ist, können am Bildschirm 3 Bedienelemente angezeigt werden, wobei die aktiven Bereiche auf der Bildschirmoberfläche drucksensitiv sind und somit Eingaben entgegennehmen können.

Mit einem GPS-Empfänger 4 können Positionssignale von mehreren Satelliten aus dem Orbit empfangen werden, und über die Zeitdifferenzen aus den Signalen kann die eigene Position genau errechnet werden. Die Nutzung anderer satellitengestützter Positionsermittlungssysteme, wie GLONASS oder Galileo, ist dabei selbstverständlich genauso denkbar und Teil der Erfindung. Neben dem GPS-Empfänger 4 kann das Navigationsgerät 1 zudem zusätzlich mit Sensoren ausgestattet sein, die mittels Extrapolationsverfahren die Positionen des Fahrzeugs noch exakter bestimmen können bzw. bei fehlendem GPS-Signal eine Positionsbestimmung überhaupt noch ermöglichen.

Eine Kartenleseeinheit 5 stellt die Zugriffschnittstelle für alle kartenbezogenen Aktionen des Navigationssystems dar und greift auf eine Kartendatenbank 6 zu. Die Kartendatenbank 6 kann dabei sowohl auf einem externen Speicher, wie einer CD, DVD oder einem wieder beschreibbaren Flashspeicher, z.B. einer SD-Karte, gespeichert sein, als auch auf einer Festplatte oder anderen internen Speichermitteln vorliegen. Die Kartenleseeinheit stellt eine so genannte Data Access Library zur Verfügung, die von anderen Komponenten des Navigationssystems verwendet werden kann. In der Kartendatenbank sind dabei zwingend Positionsdaten über Tunnel enthalten, die als Tunnelattribute bezeichnet werden sollen, gegebenenfalls auch in komprimierter Form im Zusammenhang mit Brücken (Brunnels)

Mittels einer Positionsermittlungseinheit 7 wird die aktuelle Position des Fahrzeugs bestimmt. Dazu wird vom GPS-Empfänger 4 bzw. einer oder mehreren Extrapolationseinrichtungen die aktuelle Position bezogen. Optional können auch bisher schon ermittelte Positionen, nämlich eine so genannte Positionsspur, für die Positionierung herangezogen werden, wie auch bei der letzten Positionsermittlung ermittelte Kartenelemente und eine durch die Routenberechnungseinheit 9 errechnete Route.

Aufgrund der vorhandenen Informationen wird mithilfe der Kartenleseeinheit das Element mit allen zugehörigen Daten aus der Kartendatenbank ermittelt, auf der das Fahrzeug sich momentan bewegt. Handelt es sich bei dem ermittelten Positionselement aus der Kartendatenbank um ein Element, das ein Tunnelattribut trägt bzw. kein Tunnelattribut mehr aufweist, wird abhängig von der mit dem GPS-Empfänger 4 empfangenen Signalqualität der GPS-Signale der Tunnelmodus zur Einstellung des Bildschirms 3 aktiviert bzw. deaktiviert.

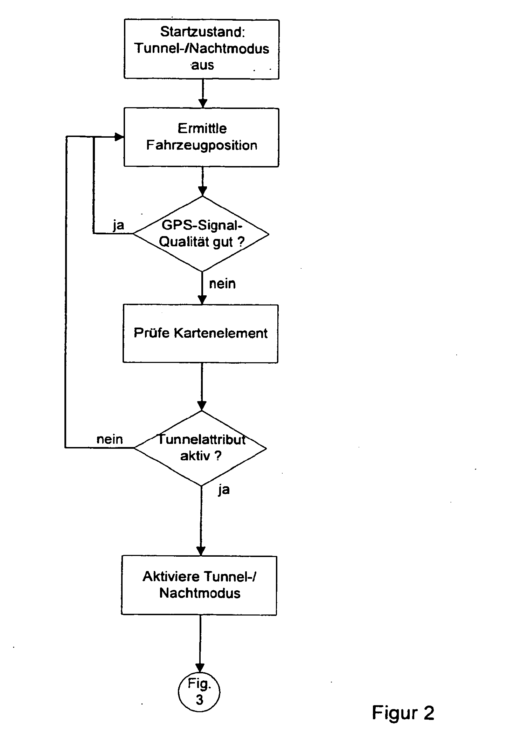

Fig. 2 stellt in einem vereinfachten Ablaufdiagramm dar, wie die erfindungsgemäße automatische Umschaltung vom Tagmodus in den Tunnelmodus vorgenommen wird. Diese Umschaltung erfolgt dabei durch eine Displaysteuerung, die auf der CPU 2 des Navigationsgeräts 1 realisiert sein kann.

Beim Einschalten des Gerätes wird der Tunnelmodus automatisch deaktiviert. Fortlaufend bzw. zyklisch, d.h. in dichter zeitlicher Folge, beispielsweise mehrfach pro Sekunde, wird während des Betriebs des Navigationsgerätes 1 über die Positionsermittlungseinheit 7 bzw. den GPS-Empfänger 4 die aktuelle Fahrzeugposition ermittelt. Zugleich wird zudem abgefragt, ob die GPS-Signalqualität ausreichend gut ist, d.h. ob das empfangene GPS-Signal eine vorgegebene Signalqualität übertrifft. Solange die Signalqualität der GPS-Signale ausreichend gut ist, wird die Ermittlung der Fahrzeugposition jeweils fortgesetzt und die Displaysteuerung behält den Anfangszustand, nämlich den aktivierten Tagmodus, bei.

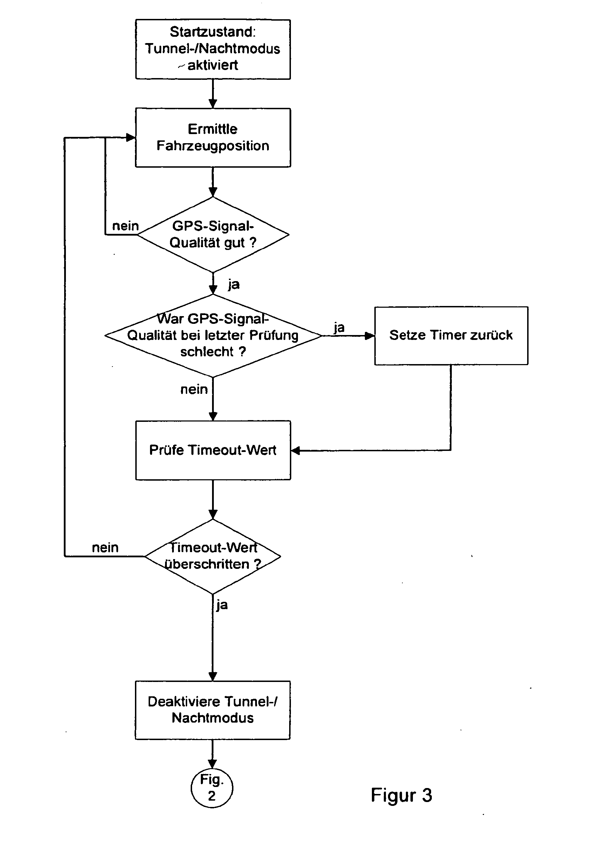

Sobald bei der Überprüfung des GPS-Status festgestellt wird, dass das GPS-Signal die vorgegebene Signalqualität unterschreitet, wird in einem weiteren Schritt überprüft, ob das Kartenelement, das die aktuelle Fahrzeugposition identifiziert, ein Tunnelattribut trägt. Ist kein Tunnelattribut vorhanden, so ist davon auszugehen, dass das GPS-Signal nicht durch einen Tunnel abgeschwächt wird, so dass mit der normalen Ermittlung der Fahrzeugposition fortgefahren wird. Weist das festgestellte Kartenelement jedoch ein Tunnelattribut auf, so geht das System davon aus, dass die Abschwächung des GPS-Signals durch den Tunnel verursacht ist. In diesem Falle aktiviert die Displaysteuerung automatisch den Tunnelmodus, so dass dann beispielsweise die Helligkeit des Displays bzw. das Farbschema abgedunkelt wird, um eine Blendwirkung des Benutzers im Tunnel zu vermeiden. Eine mögliche Zeitverzögerung, z.B. wie in Fig. 3 für das Deaktivieren vorgesehen, kann auch bei der Aktivierung des Tunnelmodus eingesetzt werden.

Nach der Aktivierung des Tunnelmodus wird eine Softwareroutine gestartet, deren Ablaufdiagramm in Fig. 3 schematisiert dargestellt ist. Wiederum wird jeweils die Fahrzeugposition ermittelt, beispielsweise durch Extrapolationsverfahren unter Berücksichtigung der Fahrzeugbeschleunigung, und zugleich die Signalqualität der empfangenen GPS-Signale überwacht. Solange die Signalqualität der empfangenen GPS-Signale die vorgegebene Signalqualität unterschreitet, ist davon auszugehen, dass sich das Fahrzeug weiterhin im Tunnel befindet, und der Tunnelmodus wird beibehalten. Erst wenn die Signalqualität der empfangenen GPS-Signale ausreichend ist, kommt eine Deaktivierung des Tunnelmodus infrage. Allerdings wird die Deaktivierung des Tunnelmodus nicht unmittelbar und sofort vorgenommen. sondern es erfolgt noch eine Prüfung der Verzögerungszeit, d.h. der Zeit, seitdem die GPS-Signalqualität wieder die konfigurierte Signalqualität überschreitet. Das wird erreicht, indem nach der ersten Detektierung einer guten GPS-Signalqualität der Timer für die Verzögerungszeit zurückgesetzt wird. Solange die Zeit des Timers nicht die konfigurierte Verzögerungszeit überschreitet, wird der Tunnelmodus nicht deaktiviert. Es erfolgt daher eine erneute Prüfung der GPS-Signalqualität. Es gibt jetzt die Möglichkeit, dass das GPS-Signal wieder die notwendige Signalqualität unterschreitet, z.B. bei einer kurzen Unterbrechung des Tunnels. Dadurch wird in dieser kurzen Unterbrechung nicht der Tunnelmodus deaktiviert. Wurde dagegen wirklich der Tunnel verlassen und das Fahrzeug befindet sich auf freier Strecke, d.h. die vorgegebene Signalqualität wird dauerhaft überschritten, so wird nach Ablauf der konfigurierten Verzögerungszeit dieses festgestellt und der Tunnelmodus kann wieder deaktiviert werden. Danach wird das in Fig. 2 dargestellte Ablaufschema wieder gestartet.

Bei dem in Fig. 3 dargestellten Ablaufschema zur Deaktivierung des Tunnelmodus ist also die kombinierte Überprüfung der GPS-Signalqualität und Berücksichtigung der Verzögerungszeit für die Frage der Deaktivierung des Tunnelmodus vorgesehen.

## Patentansprüche

1. Verfahren zum Betrieb einer Einrichtung, insbesondere einer Navigationseinrichtung für ein Kraftfahrzeug, die Einrichtung umfassend eine Prozessoreinrichtung, eine Signalempfangseinheit zum Empfang von Positionssignalen, insbesondere GPS-Signalen, eine Wegenetzdatenbank, die auch Positionsdaten über Tunnel (Tunnelattribute) enthält, eine Positionsermittlungseinheit, die die aktuelle Position des Fahrzeuges bestimmt, eine Anzeigeeinrichtung und eine Displaysteuerung zur Steuerung der Einstellungen der Anzeigeeinrichtung, insbesondere zur Regulierung der Helligkeit und/oder eines Farbschemas der Anzeigeeinrichtung, wobei die Displaysteuerung die Einstellung der Anzeigeeinrichtung beim Durchfahren eines Tunnels (Tunnelmodus) verändern kann,
mit folgenden Verfahrensschritten:
a) Ermittlung der Fahrzeugposition unter Berücksichtigung der empfangenen Positionssignale;
b) selbsttätiges Aktivieren des Tunnelmodus der Anzeigeeinrichtung durch die Displaysteuerung sofort oder zeitverzögert, wenn die ermittelte Fahrzeugposition ein Tunnelattribut aufweist und die empfangenen Positionssignale eine vorgegebene Signalqualität unterschreiten,
**dadurch gekennzeichnet,**
**dass** aus der Anzahl von empfangbaren Satelliten und aus dem HDOP-Wert ein GPS-Signalqualitäts-Parameter gebildet wird, wobei dem GPS-Signalqualitäts-Parameter bei Unterschreitung einer bestimmten Mindestzahl an empfangbaren Satelliten und/oder bei Überschreitung eines Grenzwertes für den HDOP-Wert ein Wert zugewiesen wird, bei dessen Erreichung die GPS-Signalqualität als die vorgegebene Signalqualität unterschreitend definiert ist.

2. Verfahren nach Anspruch 1,
**dadurch gekennzeichnet,**
**dass** der Tunnelmodus der Displaysteuerung beim Neustart der Navigationseinrichtung und/oder bei Aktivierung der Navigationseinrichtung aus dem Stand-By-Modus automatisch deaktiviert wird.

3. Verfahren nach Anspruch 1 oder 2,
**dadurch gekennzeichnet,**
**dass** die Displaysteuerung nach Deaktivierung des Tunnelmodus die Einstellungen der Anzeigeeinrichtung aktiviert, die vor der letzten Aktivierung des Tunnelmodus gegolten haben.

4. Verfahren nach einem der Ansprüche 1 bis 3,
**dadurch gekennzeichnet,**
**dass** die Einstellungen der Anzeigeeinrichtung beim Durchfahren eines Tunnels (Tunnelmodus) den Einstellungen der Anzeigeeinrichtung bei Nacht (Nachtmodus) entsprechen und/oder dass bei aktiviertem Nachtmodus die Aktivierung des Tunnelmodus bei Einfahrt in den Tunnel und/oder dass bei aktiviertem Nachtmodus die Deaktivierung des Tunnelmodus bei Ausfahrt aus einem Tunnel ausgeschlossen ist.

5. Verfahren nach Anspruch 4,
**dadurch gekennzeichnet,**
**dass** beim Aktivieren des Nachtmodus ausschließlich eine Regulierung der Helligkeit der Anzeigeeinrichtung vorgenommen wird.

6. Verfahren nach einem der Ansprüche 1 bis 5,
**dadurch gekennzeichnet,**
**dass** der Tunnelmodus der Anzeigeeinrichtung durch die Displaysteuerung sofort oder zeitverzögert deaktiviert wird, wenn die empfangenen Positionssignale eine vorgegebene Signalqualität überschreiten und die ermittelte Fahrzeugposition kein Tunnelattribut mehr aufweist.

7. Verfahren nach Anspruch 6,
**dadurch gekennzeichnet,**
**dass** die Fahrzeugposition im Tunnel ohne Auswertung von Positionssignalen durch ein Extrapolationsverfahren und/oder durch Auswertung anderer Sensoren ermittelt wird, wobei der Tunnelmodus der Anzeigeeinrichtung durch die Displaysteuerung sofort oder zeitverzögert deaktiviert wird, wenn die durch Extrapolation ermittelte Fahrzeugposition kein Tunnelattribut mehr aufweist und die empfangenen Positionssignale eine vorgegebene Signalqualität überschreiten.

8. Verfahren nach einem der Ansprüche 1 bis 5,
**dadurch gekennzeichnet,**
**dass** der Tunnelmodus der Anzeigeeinrichtung durch die Displaysteuerung sofort oder zeitverzögert deaktiviert wird, wenn die empfangenen Positionssignale eine vorgegebene Signalqualität überschreiten, wobei die ermittelte Fahrzeugposition beim Deaktivieren des Tunnelmodus keine Berücksichtigung findet.

9. Verfahren nach einem der Ansprüche 1 bis 5,
**dadurch gekennzeichnet,**
**dass** der Tunnelmodus der Anzeigeeinrichtung durch die Displaysteuerung sofort oder zeitverzögert deaktiviert wird, wenn die ermittelte Fahrzeugposition kein Tunnelattribut mehr aufweist, wobei die empfangene Signalqualität der Positionssignale beim Deaktivieren des Tunnelmodus keine Berücksichtigung findet.

10. Verfahren nach Anspruch 9,
**dadurch gekennzeichnet,**
**dass** die Fahrzeugposition im Tunnel ohne Auswertung von Positionssignalen durch ein Extrapolationsverfahren und/oder durch Auswertung anderer Sensoren ermittelt wird, wobei der Tunnelmodus der Anzeigeeinrichtung durch die Displaysteuerung sofort oder zeitverzögert deaktiviert wird, wenn die durch Extrapolation und/oder durch Auswertung anderer Sensoren ermittelte Fahrzeugposition kein Tunnelattribut mehr aufweist.

11. Verfahren nach einem der Ansprüche 1 bis 10,
**dadurch gekennzeichnet,**
**dass** mit einer Zeitmesseinrichtung jeweils die Zeit (T1) gemessen wird, die abgelaufen ist, seit die empfangenen Positionssignale wieder eine vorgegebene Signalqualität überschritten haben und/oder die Fahrposition kein Tunnelattribut mehr aufweist, wobei der Tunnelmodus durch die Displaysteuerung erst dann zeitverzögert deaktiviert wird, wenn die gemessene Zeit (T1) eine vorgegebene Verzögerungszeit (Z1) überschritten hat.

12. Verfahren nach einem der Ansprüche 1 bis 11,
**dadurch gekennzeichnet,**
**dass** mit einer Zeitmesseinrichtung jeweils die Zeit (T2) gemessen wird, die abgelaufen ist, seit die empfangenen Positionssignale eine vorgegebene Signalqualität unterschritten haben und/oder die Fahrposition ein Tunnelattribut aufweist, wobei der Tunnelmodus durch die Displaysteuerung erst dann zeitverzögert aktiviert wird, wenn die gemessene Zeit (T2) eine vorgegebene Verzögerungszeit (Z2) überschritten hat.

13. Verfahren nach einem der Ansprüche 1 bis 12,
**dadurch gekennzeichnet,**
**dass** mit einer Zeitmesseinrichtung jeweils die Zeit (T3) gemessen wird, die abgelaufen ist, seit der Tunnelmodus aktiviert wurde, wobei der Tunnelmodus durch die Displaysteuerung erst dann zeitverzögert deaktiviert wird, wenn die gemessene Zeit (T3) eine vorgegebene Verzögerungszeit (Z3) überschritten hat.

14. Verfahren nach einem der Ansprüche 1 bis 13,
**dadurch gekennzeichnet,**
**dass** mit einer Zeitmesseinrichtung jeweils die Zeit (T4) gemessen wird, die abgelaufen ist, seit der Tunnelmodus deaktiviert wurde, wobei der Tunnelmodus durch die Displaysteuerung nur dann zeitverzögert aktiviert wird, wenn die gemessene Zeit (T4) eine vorgegebene Verzögerungszeit (Z4) überschritten hat.

15. Verfahren nach einem der Ansprüche 11 bis 14,
**dadurch gekennzeichnet,**
**dass** zumindest zwei verschiedene Verzögerungszeiten (Z1, Z2, Z3, Z4) parallel zueinander überwacht werden, wobei der Tunnelmodus durch die Displaysteuerung nur dann zeitverzögert aktiviert oder deaktiviert wird, wenn mindestens zwei gemessene Zeiten (T1, T2, T3, T4) die jeweils zugeordneten Verzögerungszeiten (Z1, Z2, Z3, Z4) überschritten haben.

16. Verfahren nach Anspruch 15
**dadurch gekennzeichnet,**
**dass** eine Kombination der Verzögerungszeiten (Z1, Z2, Z3, Z4) nur paarweise möglich ist für die paarweise Kombination von Verzögerungszeiten (Z1, Z4) und (Z2, Z3).

17. Verfahren nach einem der Ansprüche 11 bis 16,
**dadurch gekennzeichnet,**
**dass** zumindest eine Verzögerungszeit (Z1, Z2, Z3, Z4) durch den Benutzer konfiguriert werden kann.

18. Verfahren nach Anspruch 16,
**dadurch gekennzeichnet,**
**dass** eine oder mehrere der Verzögerungszeiten (Z1, Z2, Z3, Z4) auch den Wert 0 annehmen können.

19. Verfahren nach einem der Ansprüche 1 bis 18,
**dadurch gekennzeichnet,**
**dass** die tunnelabhängige Displaysteuerung durch Eingabe eines Bedienerbefehls abgeschaltet werden kann.

20. Verfahren nach einem der Ansprüche 4 bis 19,
**dadurch gekennzeichnet,**
**dass** die Art der Darstellung des Tunnelmodus und/oder des Nachtmodus durch den Benutzer konfiguriert wird.

21. Verfahren nach einem der Ansprüche 4 bis 20,
**dadurch gekennzeichnet,**
**dass** bei der Aktivierung und/oder der Deaktivierung des Tunnelmodus und/oder des Nachtmodus die Regulierung der Helligkeit und/oder des Farbschemas in einem sanften Übergang durchgeführt wird.

22. Verfahren nach einem der Ansprüche 1 bis 21,
**dadurch gekennzeichnet,**
**dass** die Einrichtung mit zumindest einer Funktionskomponente eines Fahrzeugs verbunden ist, insbesondere über einen Fahrzeugdatenbus mit der Fahrzeugsteuerung Daten austauscht, wobei bei Detektierung der Einfahrt und/oder der Ausfahrt aus einem Tunnel ein entsprechendes Signal von der Einrichtung an die Funktionskomponente des Fahrzeugs weitergegeben wird.

23. Verfahren nach Anspruch 22,
**dadurch gekennzeichnet,**
**dass** das Abblendlicht und/oder die Lüftung und/oder Scheibenwischer und/oder die Armaturenhintergrundbeleuchtung abhängig von Tunnelsignal der Einrichtung beeinflusst werden.

## Claims

1. A method for operating a device, particularly a navigation device for a motor vehicle, wherein the device comprises a processor, a signal receiver for receiving position signals, particularly GPS-signals, a road network database that also contains position data on tunnels (tunnel attributes), a position finding unit that determines the current position of the vehicle, a display unit and a display control for controlling the adjustments of the display unit, particularly for regulating the brightness and/or a color scheme of the display unit, wherein the display control is able to change the adjustment of the display unit while driving through a tunnel (tunnel mode), and wherein said method comprises the following steps:
a) determining the vehicle position with consideration of the received position signals;
b) automatically activating the tunnel mode of the display unit by means of the display control immediately or with a certain time delay if the determined vehicle position features a tunnel attribute and the received position signals fall short of a predetermined signal quality,
**characterized in that**
a GPS signal quality parameter is determined from the number of receivable satellites and from the HDOP value, wherein, if a specific minimum number of receivable satellites is not reached and/or a limiting value for the HDOP value is exceeded, the GPS signal quality parameter is attributed a value which causes the GPS signal quality to be defined as falling short of the predetermined signal quality, once said value is reached.

2. The method according to Claim 1,
**characterized in that**
the tunnel mode of the display control is automatically deactivated when the navigation device is restarted and/or when the navigation device is activated from the standby-mode.

3. The method according to Claim 1 or 2,
**characterized in that**
the display control activates the adjustments of the display unit that applied before the last activation of the tunnel mode after the tunnel mode is deactivated.

4. The method according to one of Claims 1 to 3,
**characterized in that**
the adjustments of the display unit while driving through a tunnel (tunnel mode) correspond to the adjustments of the display unit during nighttime hours (nighttime mode) and/or that the tunnel mode cannot be activated when the vehicle enters a tunnel while the nighttime mode is activated and/or that the tunnel mode cannot be deactivated when the vehicle exits a tunnel while the nighttime mode is activated.

5. The method according to Claim 4,
**characterized in that**
only the brightness of the display unit is regulated when activating the nighttime mode.

6. The method according to one of Claims 1 to 5,
**characterized in that**
the tunnel mode of the display unit is deactivated by the display control immediately or with a certain time delay if the received position signals exceed a predetermined signal quality and the determined vehicle position no longer features a tunnel attribute.

7. The method according to Claim 6,
**characterized in that**
the vehicle position in the tunnel is determined without evaluating position signals by means of an extrapolation method and/or by evaluating other sensors, wherein the tunnel mode of the display unit is deactivated by the display control immediately or with a certain time delay if the vehicle position determined by means of extrapolation no longer features a tunnel attribute and the received position signals exceed a predetermined signal quality.

8. The method according to one of Claims 1 to 5,
**characterized in that**
the tunnel mode of the display unit is deactivated by the display control immediately or with a certain time delay if the received position signals exceed a predetermined signal quality, wherein the determined vehicle position is not taken into account in the deactivation of the tunnel mode.

9. The method according to one of Claims 1 to 5,
**characterized in that**
the tunnel mode of the display unit is deactivated by the display control immediately or with a certain time delay if the determined vehicle position no longer features a tunnel attribute, wherein the received signal quality of the position signals is not taken into account in the deactivation of the tunnel mode.

10. The method according to Claim 9,
**characterized in that**
the vehicle position in the tunnel is determined without evaluating position signals by means of an extrapolation method and/or by evaluating other sensors, wherein the tunnel mode of the display unit is deactivated by the display control immediately or with a certain time delay if the vehicle position determined by means of extrapolation and/or by evaluating other sensors no longer features a tunnel attribute.

11. The method according to one of Claims 1 to 10,
**characterized in that**
a time-measuring instrument respectively measures the time (T1) that has elapsed since the received position signals have once again exceeded a predetermined signal quality and/or the vehicle position no longer features a tunnel attribute, wherein the tunnel mode is only deactivated in a time-delayed fashion by the display control once the measured time (T1) has exceeded a predetermined time delay (Z1).

12. The method according to one of Claims 1 to 11,
**characterized in that**
a time-measuring instrument respectively measures the time (T2) that has elapsed since the received position signals have dropped below a predetermined signal quality and/or the vehicle position features a tunnel attribute, wherein the tunnel mode is only activated in a time-delayed fashion by the display control once the measured time (T2) has exceeded a predetermined time delay (Z2).

13. The method according to one of Claims 1 to 12,
**characterized in that**
a time-measuring instrument respectively measures the time (T3) that has elapsed since the tunnel mode was activated, wherein the tunnel mode is only deactivated in a time-delayed fashion by the display control once the measured time (T3) has exceeded a predetermined time delay (Z3).

14. The method according to one of Claims 1 to 13,
**characterized in that**
a time-measuring instrument respectively measures the time (T4) that has elapsed since the tunnel mode was deactivated, wherein the tunnel mode is only activated in a time-delayed fashion by the display control once the measured time (T4) has exceeded a predetermined time delay (Z4).

15. The method according to one of Claims 11 to 14,
**characterized in that**
at least two different time delays (Z1, Z2, Z3, Z4) are monitored parallel to one another, wherein the tunnel mode is only activated or deactivated in a time-delayed fashion by the display control once at least two measured times (T1, T2, T3, T4) have exceeded the respectively assigned time delays (Z1, Z2, Z3, Z4).

16. The method according to Claim 15,
**characterized in that**
a combination of the time delays (Z1, Z2, Z3, Z4) in a paired fashion is only possible for the paired combinations of time delays (Z1, Z4) and (Z2, Z3).

17. The method according to one of Claims 11 to 16,
**characterized in that**
at least one time delay (Z1, Z2, Z3, Z4) can be configured by the user.

18. The method according to Claim 16,
**characterized in that**
one or more time delays (Z1, Z2, Z3, Z4) can also assume the value 0.

19. The method according to one of Claims 1 to 18,
**characterized in that**
the tunnel-dependent display control can be switched off by inputting a user command.

20. The method according to one of Claims 4 to 19,
**characterized in that**
the manner of illustrating the tunnel mode and/or the nighttime mode is configured by the user.

21. The method according to one of Claims 4 to 20,
**characterized in that**
the brightness and/or the color scheme are regulated with a soft transition during the activation and/or the deactivation of the tunnel mode and/or the nighttime mode.

22. The method according to one of Claims 1 to 21,
**characterized in that**
the device is connected to at least one functional component of a vehicle, particularly that the device exchanges data with the vehicle control via a vehicle bus, wherein a corresponding signal is forwarded from the device to the functional component of the vehicle when it is detected that the vehicle enters and/or exits a tunnel.

23. The method according to Claim 22,
**characterized in that**
the dimmed headlights and/or the ventilation and/or the windshield wipers and/or the instrument background lighting are influenced in dependence on the tunnel signal of the device.

## Revendications

1. Procédé pour l'opération d'un dispositif, en particulier un dispositif de navigation pour un véhicule automobile, le dispositif comprenant:
un dispositif processeur, une unité réceptrice de signaux destinée à recevoir des signaux de position, en particulier des signaux GPS, une base de données de réseaux routiers également contenant des données de position portant sur tunnels (attributs tunnel), une unité de détermination de position déterminant la position actuelle du véhicule, un dispositif d'affichage et une commande d'écran pour commander les ajustages du dispositif d'affichage, en particulier pour régler la luminosité et/ou un schéma de couleur du dispositif d'affichage, la commande d'écran permettant de varier l'ajustage du dispositif d'affichage lors du passage d'un tunnel (mode tunnel),
englobant les étapes de procédé suivantes:
a) déterminer la position du véhicule en tenant compte des signaux de position reçus;
b) activer automatiquement le mode tunnel du dispositif d'affichage au moyen de la commande d'écran instantanément ou de manière retardée si la position du véhicule déterminée présente un attribut tunnel, et si les signaux de position reçus n'atteignent pas une qualité de signal prédéterminée,
**caractérisé en ce qu'**
un paramètre de la qualité du signal GPS est déterminé à partir de la quantité de satellites captables et à partir de la valeur HDOP, dans lequel, si un certain nombre minimum de satellites captables n'est pas atteint et/ou si une valeur limite pour la valeur HDOP est dépassée, une valeur est assignée au paramètre de la qualité du signal GPS, ladite valeur définissant la qualité du signal GPS comme n'ayant pas atteint la qualité du signal GPS prédéterminée lorsque ladite valeur est atteinte.

2. Procédé selon la revendication 1,
**caractérisé en ce que**
le mode tunnel de la commande d'écran est automatiquement désactivé lors de redémarrage du dispositif de navigation et/ou lors de l'activation du dispositif de navigation à partir du mode stand-by.

3. Procédé selon la revendication 1 ou 2,
**caractérisé en ce que**
la commande d'écran active les ajustages du dispositif d'affichage qui convenaient avant la dernière activation du mode tunnel, suite à la désactivation du mode tunnel.

4. Procédé selon l'une quelconque des revendications 1 à 3,
**caractérisé en ce que**
lors du passage d'un tunnel (mode tunnel) les ajustages du dispositif d'affichage correspondent aux ajustages du dispositif d'affichage de nuit (mode nuit), et/ou si le mode nuit est activé, le mode tunnel ne peut pas être activé lors de l'entrée dans le tunnel, et/ou si le mode nuit est activé, le mode tunnel ne peut pas être désactivé lors de la sortie d'un tunnel.

5. Procédé selon la revendication 4,
**caractérisé en ce que**
seulement un réglage de la luminosité du dispositif d'affichage est exécuté lors de l'activation du mode nuit.

6. Procédé selon l'une quelconque des revendications 1 à 5,
**caractérisé en ce que**
le mode tunnel du dispositif d'affichage est désactivé instantanément ou de manière retardée par la commande d'écran si les signaux de position reçus dépassent une qualité de signal prédéterminée, et si la position du véhicule déterminée ne présente plus d' attribut tunnel.

7. Procédé selon la revendication 6,
**caractérisé en ce que**
la position du véhicule dans le tunnel est déterminée sans évaluation de signaux de position au moyen d'un processus d'extrapolation et/ou au moyen d'une évaluation d'autres capteurs, le mode tunnel du dispositif d'affichage étant désactivé instantanément ou de manière retardée par la commande d'écran si la position du véhicule déterminée au moyen d'une extrapolation ne présente plus d' attribut tunnel, et si les signaux de position reçus dépassent une qualité de signal prédéterminée.

8. Procédé selon l'une quelconque des revendications 1 à 5,
**caractérisé en ce que**
le mode tunnel du dispositif d'affichage est désactivé instantanément ou de manière retardée si les signaux de position reçus dépassent une qualité de signal prédéterminée, la position du véhicule déterminée n'étant pas prise en compte lors de la désactivation du mode tunnel.

9. Procédé selon l'une quelconque des revendications 1 à 5,
**caractérisé en ce que**
le mode tunnel du dispositif d'affichage est désactivé instantanément ou de manière retardée par la commande d'écran si la position du véhicule déterminée ne présente plus d' attribut tunnel, la qualité de signal reçue des signaux de position n'étant pas prise en compte lors de la désactivation du mode tunnel.

10. Procédé selon la revendication 9,
**caractérisé en ce que**
la position du véhicule dans le tunnel est déterminée sans évaluation de signaux de position au moyen d'un processus d'extrapolation et/ou au moyen d'une évaluation d'autres capteurs, le mode tunnel du dispositif d'affichage étant désactivé instantanément ou de manière retardée par la commande d'écran si la position du véhicule déterminée au moyen d'une extrapolation et/ou au moyen d'une évaluation d'autres capteurs ne présente plus d' attribut tunnel.

11. Procédé selon l'une quelconque des revendications 1 à 10,
**caractérisé en ce que**
un dispositif de chronométrage dans chaque cas permet de mesurer le temps (T1) qui s'est écoulé depuis le moment où les signaux de position reçus ont de nouveau dépassé une qualité de signal prédéterminée et/ou la position du véhicule ne présente plus d' attribut tunnel, le mode tunnel n'étant désactivé de manière retardée par la commande d'écran qu'à l'instant où le temps mesuré (T1) a dépassé un temps de retard (Z1) prédéterminé.

12. Procédé selon l'une quelconque des revendications 1 à 11,
**caractérisé en ce qu'**
un dispositif de chronométrage dans chaque cas permet de mesurer le temps (T2) qui s'est écoulé depuis le moment où les signaux de position reçus n'ont pas atteint une qualité de signal prédéterminée et/ou la position du véhicule présente un attribut tunnel, le mode tunnel n'étant activé de manière retardée par la commande d'écran qu'à l'instant où le temps mesuré (T2) a dépassé un temps de retard (Z2) prédéterminé.

13. Procédé selon l'une quelconque des revendications 1 à 12,
**caractérisé en ce que**
le dispositif de chronométrage dans chaque cas permet de mesurer le temps (T3) qui s'est écoulé depuis l'activation du mode tunnel, le mode tunnel n'étant désactivé de manière retardée par la commande d'écran qu'à l'instant où le temps mesuré (T3) a dépassé un temps de retard (Z3) prédéterminé.

14. Procédé selon l'une quelconque des revendications 1 à 13,
**caractérisé en ce qu'**
un dispositif de chronométrage dans chaque cas permet de mesurer le temps (T4) qui s'est écoulé depuis la désactivation du mode tunnel, le mode tunnel n'étant activé de manière retardée par la commande d'écran qu'à l'instant où le temps mesuré (T4) a dépassé un temps de retard (Z4) prédéterminé.

15. Procédé selon l'une quelconque des revendications 11 à 14,
**caractérisé en ce qu'**
au moins deux temps de retard (Z1, Z2, Z3, Z4) différents sont surveillés parallèlement, le mode tunnel n'étant activé ou désactivé de manière retardée par la commande d'écran qu'à l'instant où au moins deux temps mesurés (T1, T2, T3, T4) ont dépassé les temps de retard (Z1, Z2, Z3, Z4) respectivement assignés.

16. Procédé selon la revendication 15,
**caractérisé en ce qu'**
une combinaison des temps de retard (Z1, Z2, Z3, Z4) par paires est seulement réalisable pour la combinaison par paires des temps de retard (Z1, Z4) et (Z2, Z3).

17. Procédé selon l'une quelconque des revendications 11 à 16,
**caractérisé en ce qu'**
au moins un temps de retard (Z1, Z2, Z3, Z4) peut être configuré par l'utilisateur.

18. Procédé selon la revendication 16,
**caractérisé en ce qu'**
un seul ou bien plusieurs temps de retard (Z1, Z2, Z3, Z4) peuvent aussi adopter la valeur 0.

19. Procédé selon l'une quelconque des revendications 1 à 18,
**caractérisé en ce que**
la commande d'écran qui dépend du tunnel peut être désactivée par l'entrée d'une commande d'un opérateur.

20. Procédé selon l'une quelconque des revendications 4 à 19,
**caractérisé en ce que**
la manière de la représentation du mode tunnel et/ou du mode nuit est configurée par l'utilisateur.

21. Procédé selon l'une quelconque des revendications 4 à 20,
**caractérisé en ce que**
lors de l'activation et/ou lors de la désactivation du mode tunnel et/ou du mode nuit, le réglage de la luminosité et/ou du schéma de couleur est exécuté avec une transition douce.

22. Procédé selon l'une quelconque des revendications 1 à 21,
**caractérisé en ce que**
le dispositif est relié à au moins un composant fonctionnel d'un véhicule, en particulier un échange de données avec la commande du véhicule est exécuté via un bus de données du véhicule, lors de la détection de l'entrée et/ou de la sortie d'un tunnel un signal correspondant étant transmis à partir du dispositif jusqu'au composant fonctionnel du véhicule.

23. Procédé selon la revendication 22,
**caractérisé en ce que**
les phares codes et/ou la ventilation et/ou les essuie-glaces et/ou le rétro-éclairage des instruments sont influencés en fonction du signal de tunnel du dispositif.
